# EUROPÄISCHE PATENTSCHRIFT

(11) **EP 2 037 341 B1**
(45) Veröffentlichungstag und Bekanntmachung des Hinweises auf die Patenterteilung: **19.06.2013**
(21) Anmeldenummer: 08163997.3
(22) Anmeldetag: 09.09.2008
(51) Int. Cl.: G05B 19/4068

(54) **Programmiersystem**
Programming system
Système de programmation

(30) Priorität: 14.09.2007 DE 102007045602
(43) Veröffentlichungstag der Anmeldung: 18.03.2009
(73) Patentinhaber: Traub Drehmaschinen GmbH & Co. KG, 73262 Reichenbach an der Fils (DE)
(72) Erfinder: Monz, Joachim, 73066 Uhingen (DE); Hesselmann, Jürgen, 73061 Ebersbach (DE); Käser, Thomas, 73669 Lichtenwald (DE)
(74) Vertreter: Hoeger, Stellrecht & Partner Patentanwälte

(56) Entgegenhaltungen:
- EP-A1- 0 477 365
- EP-A2- 1 515 206
- JP-A- 59 047 140
- US-A1- 2004 019 403

## Beschreibung

Die Erfindung betrifft ein Programmiersystem zum Erstellen von Datensätze umfassenden Bearbeitungsprogrammen für Werkzeugmaschinen, umfassend eine Datensatzerzeugungseinheit und einen Programmspeicher.

Bei derartigen Programmiersystemen werden die mit der Datensatzerzeugungseinheit erzeugten Datensätze aufeinanderfolgend in dem Programmspeicher abgespeichert und ergeben aufgrund ihrer Abfolge das Bearbeitungsprogramm für die Werkzeugmaschine.

Sollte ein derartiger Datensatz jedoch fehlerhaft sein, wird dies entweder erst bei der Abarbeitung des Bearbeitungsprogramms auf einer realen Werkzeugmaschine erkannt, wie beispielsweise in der JP59047140A beschrieben, oder gegebenenfalls bei der Simulation des Bearbeitungsprogramms auf einer virtuellen Werkzeugmaschine.

In jedem Fall liegt bei Erkennen eines fehlerhaften Datensatzes ein fertiges Programm vor, so dass die Korrektur dieses Datensatzes stets mit erheblichem Aufwand verbunden ist, insbesondere wenn bei einem Bearbeitungsprogramm eine Vielzahl von fehlerhaften Datensätzen vorhanden ist.

Der Erfindung liegt daher die Aufgabe zugrunde, ein Programmiersystem zu schaffen, bei welchem der Aufwand für die Berichtigung von Datensätzen in dem Bearbeitungsprogramm reduziert werden kann.

Diese Aufgabe wird bei einem Programmiersystem der eingangs beschriebenen Art erfindungsgemäß dadurch gelöst, dass der Datensatzerzeugungseinheit ein Zwischenspeicher zugeordnet ist, in welchem ein von dieser erzeugter Datensatz vor einem Ablegen in den Bearbeitungsprogrammen im Programmspeicher speicherbar ist, dass eine Konventionsprüfungseinheit vorgesehen ist, welche den im Zwischenspeicher gehaltenen Datensatz auf die Einhaltung mindestens einer geometrischen und/oder mathematischen Konvention der Werkzeugmaschine umfassend die Feststellung, ob die durch einen oder mehrere Datensätze vorgegebene Kontur eines Werkstücks mit dem zur Herstellung dieser Kontur vorgesehenen Werkzeug erzeugbar ist, überprüft und eine Prüfantwort erzeugt und dass bei positiver Prüfantwort eine Übergabe des Datensatzes in den Programmspeicher erfolgt.

Der Vorteil der erfindungsgemäßen Lösung ist darin zu sehen, dass mit dieser die Möglichkeit besteht, zumindest bei einem Teil der Datensätze unmittelbar nach Generierung derselben eine Überprüfung auf mindestens eine einzuhaltende Konvention vorzunehmen und damit den Bediener oder Programmierer sofort zur Korrektur zu veranlassen, um dann im erstellten Bearbeitungsprogramm eine möglichst geringe Zahl fehlerhafter Datensätze vorliegen zu haben.

Damit lässt sich der nachfolgende Aufwand reduzieren, der erforderlich ist, um einerseits fehlerhafte Datensätze zu erkennen und andererseits zu korrigieren.

Hinsichtlich der Ausbildung der Datensatzerzeugungseinheit wurden bislang keine näheren Angaben gemacht.

Zweckmäßigerweise ist die Datensatzerzeugungseinheit eine manuelle Aktionen ansprechende Datensatzerzeugungseinheit, welche auf eine manuelle Aktion reagiert und die Erzeugung eines Datensatzes ausführt.

Beispielsweise ist dabei die Datensatzerzeugungseinheit so ausgebildet, dass sie ein manuell bedienbares Eingabefeld aufweist.

Alternativ dazu ist es denkbar, dass die manuell betätigbare Datensatzerzeugungseinheit den Datensatz aufgrund einer manuellen Bewegung von realen Bearbeitungseinheiten generiert.

Eine andere alternative Lösung sieht vor, dass die Datensatzerzeugungseinheit den Datensatz aufgrund einer manuellen Bewegung virtueller Bearbeitungseinheiten generiert.

In allen vorstehend beschriebenen Fällen der manuellen Einwirkung im Zusammenhang mit der Erzeugung eines Datensatzes werden die Datensätze aufeinanderfolgend erzeugt und aufgrund der manuellen Einwirkung hat der Bediener nach jeder Erzeugung eines Datensatzes die Möglichkeit, diesen Datensatz - sollte er nicht den Konventionen entsprechen - zu korrigieren.

Hinsichtlich der Arbeitsweise der Konventionsprüfeinheit wurden bislang keine detaillierten Angaben gemacht.

So sieht eine vorteilhafte Lösung vor, dass die Konventionsprüfeinheit den Datensatz im Hinblick auf mindestens eine steuerungsbedingte geometrische und/oder mathematische Konvention prüft.

Derartige steuerungsbedingte geometrische und/oder mathematische Konventionen umfassen beispielsweise Zusammenhänge zwischen einer Ausrichtung eines Werkzeugs, insbesondere einer Schneide eines Werkzeugs und einer damit zu bearbeitenden Kontur eines Werkstücks.

Ferner sieht eine vorteilhafte Lösung vor, dass die Konventionsprüfeinheit den Datensatz im Hinblick auf mindestens eine werkzeugmaschinenbedingte Konvention prüft.

Derartige werkzeugmaschinenbedingte Konventionen sind beispielsweise Angaben über die geometrische Ausdehnung oder Abmessungen der Bearbeitungseinheiten im Arbeitsraum sowie die geometrische Ausdehnung oder Abmessungen eines Maschinenbetts und die geometrische Ausdehnung oder Abmessungen des Arbeitsraums selbst, die dazu führen, dass Relativpositionen zwischen Werkzeug und Werkstück teilweise nicht realisierbar sind.

Hinsichtlich der Arbeitsweise der Konventionsprüfeinheit wurden ebenfalls im Zusammenhang mit der bisherigen Erläuterung des erfindungsgemäßen Programmiersystems keine näheren Angaben gemacht.

Eine vorteilhafte Ausführungsform sieht dabei vor, dass die Konventionsprüfeinheit den in dem Zwischenspeicher gehaltenen Datensatz über Rechenalgorithmen auf die Einhaltung der mindestens einen Konvention abprüft.

Darüber hinaus wurde im Zusammenhang mit der Erläuterung des erfindungsgemäßen Programmiersystems nicht näher auf die visuelle Unterstützung eines Bedieners eingegangen.

Prinzipiell ist es nicht erforderlich, einen Bediener visuell zu unterstützen, wenn dieser die Möglichkeit hat, den Datensatz manuell über die Datensatzerzeugungseinheit zu generieren.

Dennoch ist es aus Gründen einer einfachen Bedienbarkeit des erfindungsgemäßen Programmiersystems von Vorteil, wenn diesem eine Visualisierungseinheit zugeordnet ist, auf der sich beispielsweise die Datensätze oder auch die Prüfantworten der Konventionsprüfeinheit anzeigen lassen.

Ferner wurde bislang hinsichtlich der Konsequenzen bei einer negativen Prüfantwort, das heißt bei der Prüfantwort "nein" keine näheren Angaben zur weiteren Bearbeitung des Datensatzes gemacht.

Eine vorteilhafte Lösung sieht vor, dass bei negativer Prüfantwort der Konventionsprüfeinheit die Datensatzerzeugungseinheit in einen Korrekturmodus übergeht.

In einem derartigen Korrekturmodus stellt die Datensatzerzeugungseinheit den in dem Zwischenspeicher gespeicherten Datensatz zur Korrektur zur Verfügung.

Vorzugsweise wird dabei der Datensatz auf der Visualisierungseinheit dargestellt und der Bediener hat die Möglichkeit, den Datensatz zu überprüfen und gegebenenfalls von sich aus zu korrigieren.

Um die Korrektur für den Bediener noch weiter zu erleichtern, ist vorzugsweise vorgesehen, dass bei negativer Prüfantwort der Konventionsprüfeinheit eine Hilfeeinheit aktivierbar ist.

Eine derartige Hilfeeinheit schafft die Möglichkeit, dem Bediener weitere Hilfsmittel an die Hand zu geben, um den Fehler in dem Datensatz zu erkennen und/oder den Fehler schnell zu beheben.

Beispielsweise besteht mit der Hilfeeinheit die Möglichkeit, die verletzte Konvention darzustellen.

Es besteht aber auch die Möglichkeit, die Verletzung der Konvention grafisch zu illustrieren.

Hinsichtlich der Ausbildung der Konventionsprüfeinheit selbst wurden bislang keine näheren Angaben gemacht.

So sieht eine vorteilhafte Lösung vor, dass die Konventionsprüfeinheit eine von einer Maschinensteuerung einer Werkzeugmaschine separate Einheit ist.

Eine andere vorteilhafte Lösung sieht vor, dass die Konventionsprüfeinheit eine in einer Maschinensteuerung vorgesehene Konventionsprüfeinheit ist.

Das heißt, dass in diesem Fall das Programmiersystem auf eine ohnehin in einer Maschinensteuerung vorhandene Konventionsprüfeinheit zurückgreift und diese zur Konventionsprüfung der Datensätze einsetzt.

Beispielsweise ist eine derartige in der Maschinensteuerung vorgesehene Konventionsprüfeinheit einem das Bearbeitungsprogramm abarbeitenden Kernsteuerungsprogramm der Maschinensteuerung zugeordnet.

Insbesondere ist innerhalb des Kernsteuerungsprogramms die Konventionsprüfeinheit einer Stufe zum Interpretieren der Datensätze durch das Kernsteuerungsprogramm zugeordnet.

Darüber hinaus betrifft die Erfindung auch ein Verfahren zum Erstellen von Datensätze umfassenden Bearbeitungsprogrammen für Werkzeugmaschinen unter Verwendung einer Datensatzerzeugungseinheit und eines Programmspeichers, wobei erfindungsgemäß bei diesem Verfahren ein von der Datensatzerzeugungseinheit erzeugter Datensatz vor einem Ablegen in dem Bearbeitungsprogramm gespeichert wird, eine Konventionsprüfung durchgeführt wird, welche den Datensatz auf die Einhaltung mindestens einer geometrischen und/oder mathematischen Konvention der Werkzeugmaschine, umfassend die Feststellung, ob die durch einen oder mehrere Datensätze vorgegebene Kontur eines Werkstücks mit dem zur Herstellung dieser Kontur vorgesehenen Werkzeug erzeugbar ist, überprüft und eine Prüfungsantwort erzeugt und bei positiver Prüfantwort der Datensatz in den Programmspeicher übergeben wird.

Weitere Merkmale des erfindungsgemäßen Verfahrens ergeben sich aus der vorstehenden Beschreibung einzelner Merkmale des erfindungsgemäßen Programmsystems.

Ferner ergeben sich weitere Merkmale und Vorteile der Erfindung aus der nachfolgenden Beschreibung sowie der zeichnerischen Darstellung einiger Ausführungsbeispiele der erfindungsgemäßen Lösung.

In der Zeichnung zeigen:
- Fig. 1: eine schematische Darstellung eines ersten Ausführungsbeispiels eines erfindungsgemäßen Programmiersystems;
- Fig. 2: ein Ablaufdiagramm der Konventionsüberprüfung bei dem ersten Ausführungsbeispiel des erfindungsgemäßen Programmiersystems;
- Fig. 3: eine schematische Darstellung einer relativen Orientierung von Werkstückkontur und Werkzeug, welche eine steuerungs- bedingte Konvention erfüllen;
- Fig. 4: eine schematische Darstellung ähnlich Fig. 3 einer Kontur eines Werkstücks und eines Werkzeugs, welche eine steuerungs- bedingte Konvention nicht erfüllen;
- Fig. 5: eine schematische Darstellung ähnlich Fig. 1 eines zweiten Ausführungsbeispiels eines erfindungsgemäßen Programmier- systems;
- Fig. 6: eine schematische Darstellung ähnlich Fig. 1 eines dritten Ausführungsbeispiels eines erfindungsgemäßen Programmier- systems und
- Fig. 7: eine schematische Darstellung ähnlich Fig. 1 eines vierten Ausführungsbeispiels eines erfindungsgemäßen Programmier- systems.

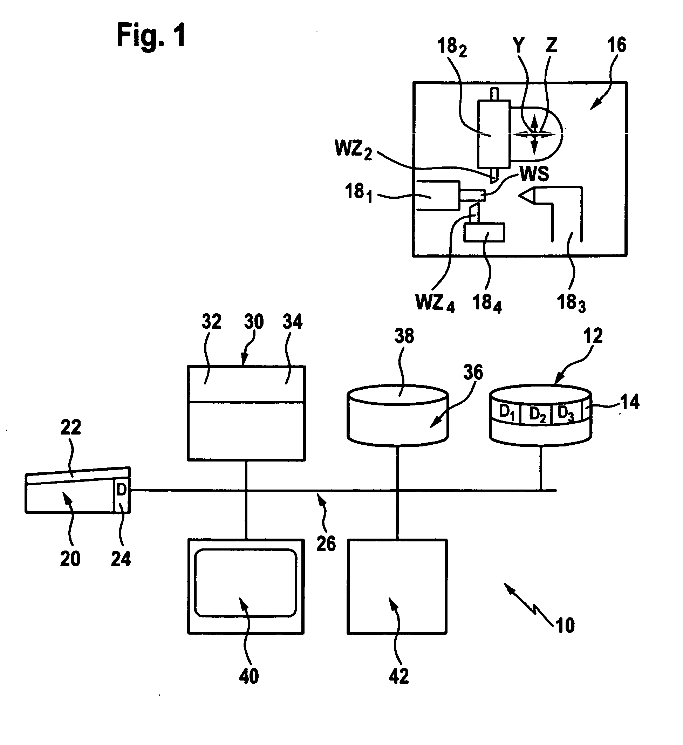

Ein erstes Ausführungsbeispiel eines erfindungsgemäßen Programmiergeräts, in Fig. 1 als Ganzes mit 10 bezeichnet, umfasst einen Programmspeicher 12, in dem ein zu erzeugendes Bearbeitungsprogramm 14 speicherbar ist, welches aus einer Sequenz von Datensätzen D₁...Dₙ aufgebaut ist.

Ein derartiges Bearbeitungsprogramm 14 dient beispielsweise dazu, eine Werkzeugmaschine 16 zu betreiben, wobei Bearbeitungseinheiten 18 der Werkzeugmaschine 16 entweder ein Werkstück WS oder ein Werkzeug WZ tragen.

Die Erstellung eines derartigen Bearbeitungsprogramms 14 erfolgt durch Erzeugung der Sequenz aufeinanderfolgender Datensätze D₁...Dₙ mittels einer Datensatzerzeugungseinheit 20, in welche mittels eines Tastenfelds 22 aufeinanderfolgend Datensätze D eingebbar sind.

Wird mittels des Tastenfelds 22 ein derartiger Datensatz D in die Datensatzerzeugungseinheit 20 eingegeben, so speichert die Datensatzerzeugungseinheit 20 diesen Datensatz D in einem Zwischenspeicher 24.

Mit der Datensatzerzeugungseinheit 20 ist ferner über ein Datennetzwerk 26 eine Konventionsprüfeinheit 30 verbunden, welche in der Lage ist, den im Zwischenspeicher 24 gespeicherten Datensatz D auf geometrisch/ mathematische Konventionen einer Werkzeugmaschinensteuerung, insbesondere einer spezifischen Werkzeugmaschinensteuerung zu überprüfen. Zu diesem Zweck umfasst die Konventionsprüfeinheit 30 einen Speicher 32, in welchem zur Konventionsprüfung des Datensatzes D steuerungsseitige Konventionen 34 abgelegt sind, wobei die steuerungsseitigen Konventionen 34 durch Rechenalgorithmen festgelegt sind.

Ferner zieht die Konventionsprüfeinheit 30 noch zur Konventionsprüfung als Randbedingungen in einem Speicher 36 gespeicherte werkzeugmaschinenseitige Konventionen 38 heran, die Auskunft über geometrische Verhältnisse in einem Arbeitsraum einer Werkzeugmaschine ergeben, insbesondere über geometrische Verhältnisse von in dem Arbeitsraum vorgesehenen Bearbeitungseinheiten und Werkzeugen.

Hierzu ist beispielsweise der Speicher 36 ebenfalls über das Datennetzwerk 26 mit der Konventionsprüfeinheit 30 verbunden.

Das Datennetzwerk 26 verbindet außerdem noch eine Visualisierungseinheit 40 sowie eine Hilfeeinheit 42 sowohl mit der Datensatzerzeugungseinheit 20, mit der Konventionsprüfeinheit 30, mit dem Speicher 36 und mit dem Programmspeicher 12.

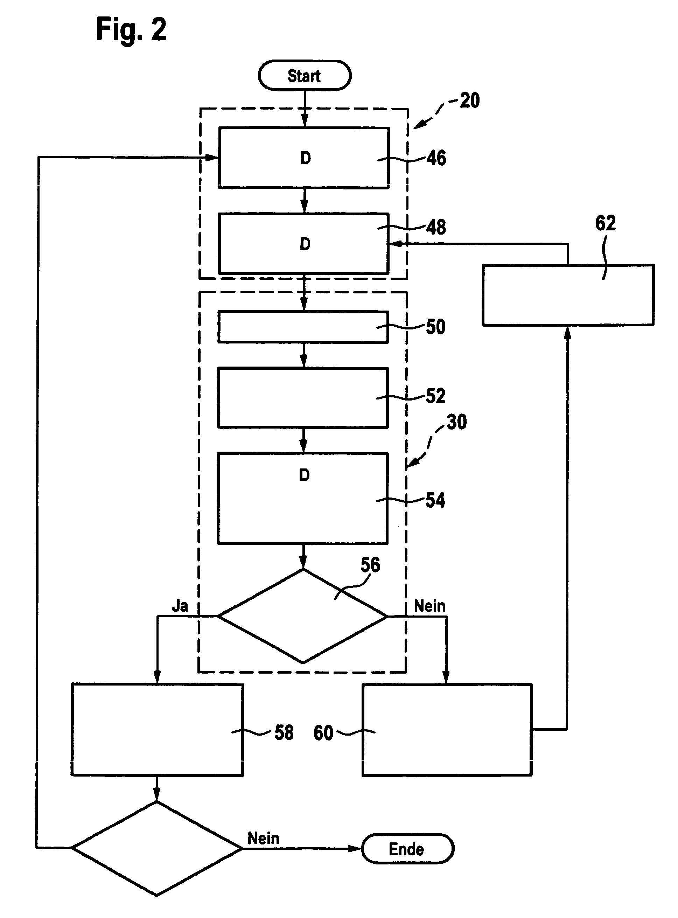

Wie in Fig. 2 dargestellt, arbeitet das erfindungsgemäße Programmiersystem 10 derart, dass in einem ersten Vorbereitungsschritt 46 in der Datensatzerzeugungseinheit 20 ein Datensatz D erzeugt wird.

Dieser Datensatz D wird dann in einem zweiten Vorbereitungsschritt 48 dem Zwischenspeicher 24 übergeben, welcher den Datensatz D für die Konventionsprüfeinheit 30 zur Verfügung stellt.

In der Konventionsprüfeinheit 30 wird zunächst in einem ersten Prüfschritt 50 die Konventionsprüfung gestartet, wozu der Datensatz D vom Zwischenspeicher 24 in die Konventionsprüfeinheit 30 kopiert wird.

In einem zweiten Prüfschritt 52 erfolgt ein Lesen der in dem Speicher 36 gespeicherten werkzeugmaschinenseitigen Konventionen 38, und Herunterladen derselben in die Konventionsprüfeinheit 30.

In einem dritten Prüfschritt 54 erfolgt die eigentliche Anwendung der steuerungsseitigen Konventionen 34 und der werkzeugmaschinenseitigen Konventionen 38 auf den Datensatz D, um die Einhaltung der Konventionen durch diesen Datensatz D zu überprüfen.

Das Ergebnis der Konventionsprüfung wird seitens der Konventionsprüfeinheit 30 in einem vierten Prüfschritt 56 in Form einer Prüfantwort ausgegeben.

Im Fall der Prüfantwort "ja" wird in einem Übergabeschritt 58 eine Übergabe des Datensatzes D aus dem Zwischenspeicher 24 in dem Programmspeicher 12 veranlasst.

Nach dem Übergabeschritt 58 erfolgt entweder eine erneute Aktivierung der Datensatzerzeugungseinheit 20 zur Ausgabe des nächstfolgenden Datensatzes D oder ein Ende der Programmierung.

Ist jedoch im Prüfschritt 56 die Prüfantwort der Konventionsprüfeinheit 30 "nein", so wird in einem Schritt 60 die Visualisierungseinheit 40 aktiviert, welche einem Bediener die Prüfantwort "nein" anzeigt.

Ferner kann in dem Anzeigeschritt 60 noch die Hilfeeinheit 42 über das Datentransfersystem 26 herangezogen werden, um dem Bediener mittels der Visualisierungseinheit 40 die Prüfantwort zu erläutern.

Die Hilfeeinheit 42 umfasst hierzu beispielsweise unterstützende Informationen für den Bediener, die es dem Bediener erleichtern, in dem Datensatz D den gemachten Fehler zu erkennen.

Ferner wird in einem Korrekturschritt 62 ein Eingabemodus der Datensatzerzeugungseinheit 20 aktiviert, in welchem der in dem Zwischenspeicher 24 gespeicherte Datensatz D unter Berücksichtigung der in der Visualisierungseinheit 40 angezeigten Zusatzinformationen korrigiert werden kann.

Ist der Datensatz D im Zwischenspeicher 24 korrigiert, so erfolgt erneut eine Konventionsprüfung in der Konventionsprüfeinheit 30, um sicherzugehen, dass auch der korrigierte Datensatz D im Zwischenspeicher 24 die erforderlichen geometrischen und/oder mathematischen Konventionen erfüllt.

Unter geometrisch/mathematischen steuerseitigen Konventionen 34 im Sinne dieser Erfindung sind beispielsweise Vorschriften und Regeln zu verstehen, die unter Berücksichtigung der Werkzeuge WZ und der Werkstückgeometrie erlauben, festzustellen, ob ein eingegebener Datensatz D im Rahmen einer Bearbeitung eines Werkstücks WS eine sinnvolle oder eine nicht sinnvolle Bearbeitung vorgibt.

Dabei sind beispielsweise unter Konventionen Regeln zu verstehen, die es erlauben, festzustellen, ob eine durch einen oder mehrere Datensätze D vorgegebene Kontur K eines Werkstücks WS mit dem zur Herstellung dieser Kontur vorgesehenen Werkzeug WZ erzeugbar ist oder nicht.

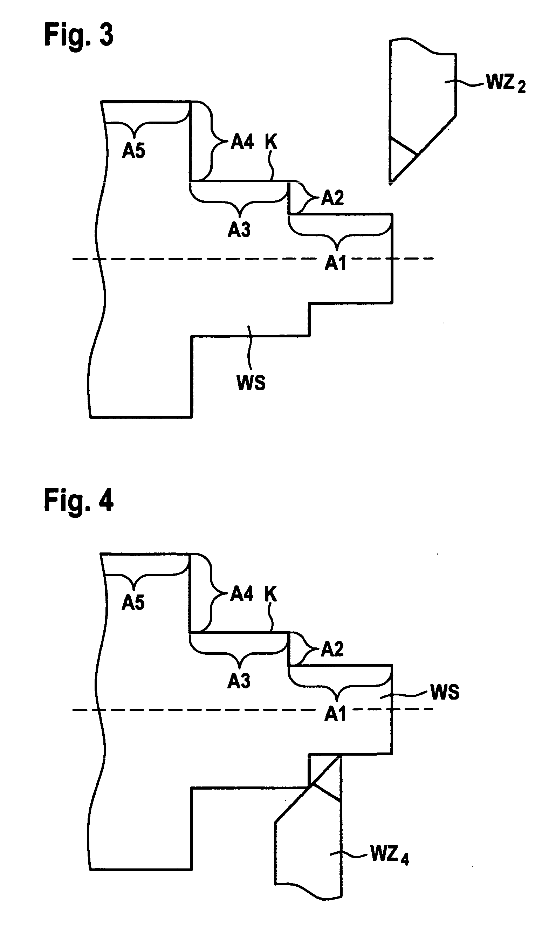

Soll beispielsweise, wie in Fig. 3 dargestellt, eine Kontur K eines Werkstücks WS mit einem Werkzeug WZ₁ hergestellt werden, so ergibt sich für jeden, das Werkzeug WZ längs jeweils eines Abschnitts A1, A2, A3, A4, A5 der Kontur K führenden Datensatz D die Prüfantwort "ja" bei der Konventionsprüfeinheit 30, da die Werkzeuggeometrie, insbesondere die Schneidengeometrie, sowie deren Ausrichtung relativ zu den einzelnen Abschnitten A1, A2, A3, A4, A5 der Kontur K das Erstellen der Kontur K ermöglicht.

Für dieselbe Kontur K ist, wie in Fig. 4 dargestellt, bei Vorsehen eines Werkzeugs WZ₄ bei dem den Abschnitten A2 und A4 entsprechenden Datensätzen D die Prüfantwort der Konventionsprüfeinheit 30 "nein" da mit dem Werkzeug WZ₄ weder nach dem Abschnitt A5 von links kommend noch nach dem Abschnitt A1 von rechts kommend in den Abschnitten A2 und A4 eine Bearbeitung der Kontur K aufgrund der Werkzeuggeometrie, der Schneidengeometrie und der Werkzeugausrichtung relativ zur Kontur K nicht möglich ist.

Zusätzlich sind bei der Konventionsprüfung noch die werkzeugmaschinenseitigen Konventionen 38 als Randbedingung zu berücksichtigen, die beispielsweise aufgrund der geometrischen Ausbildung der Bearbeitungseinheiten 18 und/oder des Maschinenbetts bestimmte Positionen oder Bewegungen oder Ausrichtungen der Werkzeuge WZ relativ zur Kontur K nicht zulassen.

Um im Fall einer Prüfantwort "nein" der Konventionsprüfeinheit 30 dem Bediener oder Programmierer zu vermitteln, warum die Prüfantwort so ausgefallen ist, ist die Hilfeeinheit 42 beispielsweise in der Lage, geometrische oder grafische Modelle der Datensätze und/oder der Kontur K zur Verfügung zu stellen, die es erlauben, den Grund für die Prüfantwort "nein" auf der Visualisierungseinheit 40 zumindest anzudeuten oder darzustellen.

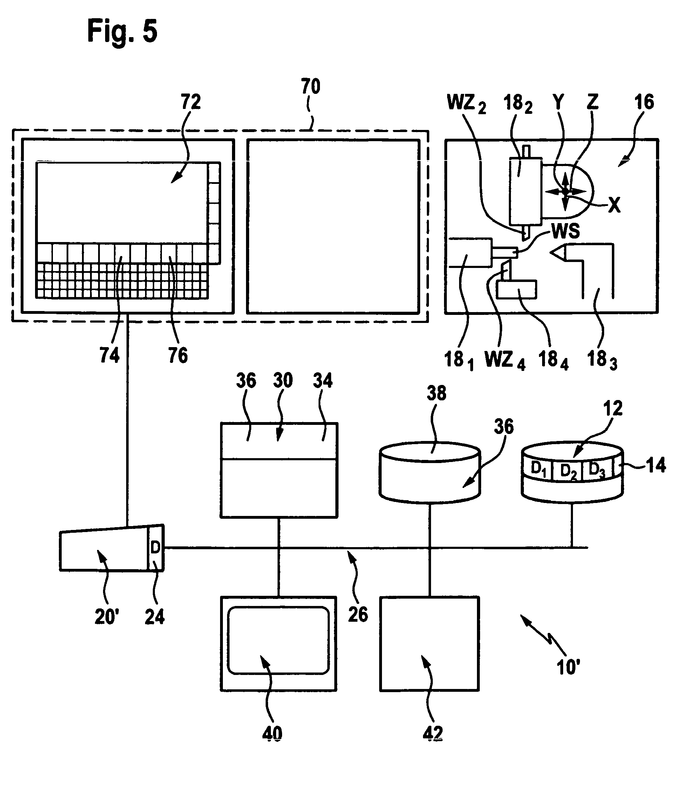

Bei einem zweiten Ausführungsbeispiel eines erfindungsgemäßen Programmiersystems 10', dargestellt in Fig. 5, ist die Datensatzerzeugungseinheit 20' mit einer Maschinensteuerung 70 der Werkzeugmaschine 16 gekoppelt, vorzugsweise mit einer Bediensteuerung 72 derselben, welche in einem manuellen Verfahrmodus betreibbar ist, in welchem durch Betätigen von Betätigungselementen 74 und 76 die einzelnen Bearbeitungseinheiten 18 manuell relativ zueinander bewegbar sind, wobei bei der erfindungsgemäßen Lösung die Datensatzerzeugungseinheit 20 die manuell über die Bediensteuerung 72 ausgelösten Bewegungen der Bearbeitungseinheiten 18 erfasst und selbsttätig in aufeinanderfolgende Datensätze D konvertiert.

Auch ein derart durch Konversion in dem Programmiersystem 10' erzeugter Datensatz D wird in dem Zwischenspeicher 24 gespeichert und es wird mittels der Konventionsprüfeinheit 30 die im Zusammenhang mit dem ersten Ausführungsbeispiel im Detail erläuterte Konventionsprüfung durchgeführt und nach erfolgreicher Konventionsprüfung, das heißt Prüfantwort "ja", wird dieser Datensatz D aus dem Zwischenspeicher 24 in dem Programmspeicher 12 beim Bearbeitungsprogramm 14 abgelegt.

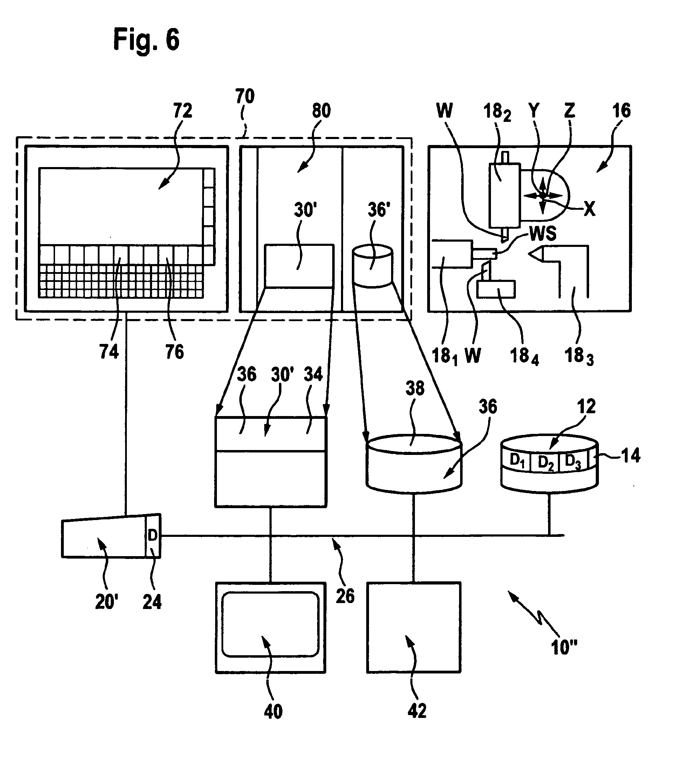

Bei einem dritten Ausführungsbeispiel eines erfindungsgemäßen Programmiersystems, dargestellt in Fig. 6 ist im Gegensatz zum zweiten Ausführungsbeispiel, dargestellt in Fig. 5 die Konventionsprüfungseinheit 30' keine selbstständige Einheit, sondern eine in einem Kernsteuerungsprogramm 80 der Maschinensteuerung 70 vorhandene Konventionsprüfungseinheit, welche beispielsweise beim Abarbeiten von CNC-Sätzen in dem Kernsteuerungsprogramm 80 eingesetzt wird, um sicherzustellen, dass keine nicht ausführbaren CNC-Sätze bearbeitet werden.

Beispielsweise ist die Konventionsprüfeinheit 30' im Kernsteuerungsprogramm 80 so eingesetzt, dass mit dieser die Datensätze nach dem Interpretieren derselben überprüft werden.

Ferner ist beispielsweise auch der Speicher 36', in dem die werkzeugmaschinenseitigen Konventionen 38 gespeichert sind, ein Speicher in der Maschinensteuerung 70, auf welchen die Konventionsprüfeinheit 30' bei Überprüfen der Datensätze im Verlauf des Abarbeitens derselben im Kernsteuerungsprogramm 80 zugreifen kann.

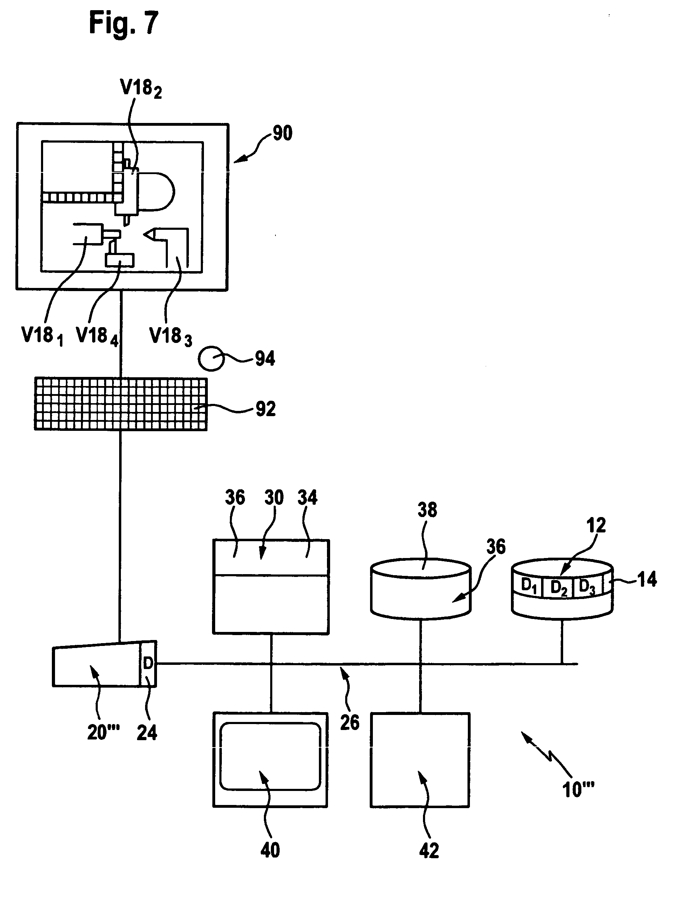

Bei einem dritten Ausführungsbeispiel, dargestellt in Fig. 7, ist das erfindungsgemäße Programmiersystem 10"' mit einer Datenerzeugungseinheit 20"' versehen, welche nicht mit einer Maschinensteuerung 70 der Werkzeugmaschine 16 zusammenwirkt, sondern mit einem als Ganzes mit 90 bezeichneten Simulationssystem, welches beispielsweise in der Lage ist, Simulationen eines Bearbeitungsprogramms 14 durchzuführen und dabei virtuelle Bearbeitungseinheiten V18 relativ zueinander zu bewegen.

Durch manuelles Bewegen der virtuellen Bearbeitungseinheiten V18 mittels Bedienelementen 92 und 94 in dem Simulationssystem 90 ist die Datenerzeugungseinheit 20"' aufgrund ihrer Kopplung mit dem Simulationssystem 90 ebenfalls in der Lage, aufeinanderfolgende Datensätze D zu generieren, wobei ein jeweils generierter Datensatz D wiederum im Zwischenspeicher 24 gespeichert wird, um die Konventionsprüfung mittels der Konventionsprüfeinheit 30 in der beschriebenen Art und Weise durchzuführen und bei einer Prüfantwort "ja" den jeweiligen Datensatz in dem Bearbeitungsprogramm 14 im Programmspeicher 12 abzulegen.

Bei allen Ausführungsbeispielen sind im Übrigen diejenigen Komponenten die mit denen voranstehender Ausführungsbeispiele identisch sind, mit denselben Bezugszeichen versehen, so dass hinsichtlich der Beschreibung derselben stets vollinhaltlich auf die Ausführungen zu mindestens einem der voranstehenden Ausführungsbeispiele Bezug genommen werden kann.

## Patentansprüche

1. Programmiersystem zum Erstellen von Datensätze (D) umfassenden Bearbeitungsprogrammen (14) für Werkzeugmaschinen (16), umfassend eine Datensatzerzeugungseinheit (20) und einen Programmspeicher (12),
**dadurch gekennzeichnet, dass** der Datensatzerzeugungseinheit (20) ein Zwischenspeicher (24) zugeordnet ist, in welchem ein von dieser erzeugter Datensatz (D) vor einem Ablegen in dem Bearbeitungsprogramm (14) im Programmspeicher (12) speicherbar ist, dass eine Konventionsprüfeinheit (30) vorgesehen ist, welche den im Zwischenspeicher (24) gehaltenen Datensatz (D) auf die Einhaltung mindestens einer geometrischen und/oder mathematischen Konvention (34), umfassend die Feststellung, ob die durch einen oder mehrere Datensätze (D) vorgegebene Kontur (K) eines Werkstücks (WS) mit dem zur Herstellung dieser Kontur (K) vorgesehenen Werkzeug (WZ) erzeugbar ist, überprüft und eine Prüfantwort erzeugt und dass bei positiver Prüfantwort eine Übergabe des Datensatzes (D) in den Programmspeicher (12) erfolgt.

2. Programmiersystem nach Anspruch 1, **dadurch gekennzeichnet, dass** die Datensatzerzeugungseinheit (20) eine auf manuelle Aktionen entsprechende Datensatzerzeugungseinheit ist.

3. Programmiersystem nach Anspruch 2, **dadurch gekennzeichnet, dass** die Datensatzerzeugungseinheit (20) ein manuell bedienbares Eingabefeld (22) aufweist.

4. Programmiersystem nach Anspruch 2, **dadurch gekennzeichnet, dass** die Datensatzerzeugungseinheit (20') den Datensatz (D) aufgrund einer manuellen Bewegung von Bearbeitungseinheiten (18) generiert.

5. Programmiersystem nach einem der voranstehenden Ansprüche, **dadurch gekennzeichnet, dass** die Konventionsprüfeinheit (30) den Datensatz (D) im Hinblick auf mindestens eine steuerungsbedingte geometrische und/oder mathematische Konvention (34) prüft.

6. Programmiersystem nach einem der voranstehenden Ansprüche, **dadurch gekennzeichnet, dass** die Konventionsprüfeinheit (20) den Datensatz (D) im Hinblick auf mindestens eine werkzeugmaschinenbedingte Konvention (38) überprüft.

7. Programmiersystem nach einem der voranstehenden Ansprüche, **dadurch gekennzeichnet, dass** die Konventionsprüfeinheit (30) den in dem Zwischenspeicher (24) gehaltenen Datensatz (D) über Rechenalgorithmen auf die Einhaltung der mindestens einen Konvention (34, 38) abprüft.

8. Programmiersystem nach einem der voranstehenden Ansprüche, **dadurch gekennzeichnet, dass** dem Programmiersystem (10) eine Visualisierungseinheit (40) zugeordnet ist.

9. Programmiersystem nach einem der voranstehenden Ansprüche, **dadurch gekennzeichnet, dass** bei negativer Prüfantwort der Konventionsprüfeinheit (30) die Datensatzerzeugungseinheit (20) in einen Korrekturmodus übergeht.

10. Programmiersystem nach einem der voranstehenden Ansprüche, **dadurch gekennzeichnet, dass** bei negativer Prüfantwort der Konventionsprüfeinheit (30) eine Hilfeeinheit (42) aktivierbar ist.

11. Programmsystem nach Anspruch 10, **dadurch gekennzeichnet, dass** die Hilfeeinheit (42) Bedienerinformationen ermittelt und anzeigt.

12. Programmiersystem nach einem der voranstehenden Ansprüche, **dadurch gekennzeichnet, dass** die Konventionsprüfeinheit (30) eine von einer Maschinensteuerung (70) einer Werkzeugmaschine (16) separate Einheit ist.

13. Programmiersystem nach einem der Ansprüche 1 bis 11, **dadurch gekennzeichnet, dass** die Konventionsprüfeinheit (30') eine in einer Maschinensteuerung (70) vorgesehene Konventionsprüfeinheit ist.

14. Programmiersystem nach Anspruch 13, **dadurch gekennzeichnet, dass** die in der Maschinensteuerung (70) vorgesehene Konventionsprüfeinheit (30') einem ein Bearbeitungsprogramm (14) abarbeitenden Kernsteuerungsprogramm (80) zugeordnet ist.

15. Verfahren zum Erstellen von Datensätze (D) umfassenden Bearbeitungsprogrammen (14) für Werkzeugmaschinen (16), unter Verwendung einer Datensatzerzeugungseinheit (20) und eines Programmspeichers (12), **dadurch gekennzeichnet, dass** um ein von der Datensatzerzeugungseinheit (20) erzeugter Datensatz (D) vor einem Ablegen in dem Bearbeitungsprogramm (14) gespeichert wird, dass eine Konventionsprüfung durchgeführt wird, welche den Datensatz (D) auf die Einhaltung mindestens einer geometrischen und/oder mathematischen Konvention (34), umfassend die Feststellung, ob die durch einen oder mehrere Datensätze (D) vorgegebene Kontur (K) eines Werkstücks (WS) mit dem zur Herstellung dieser Kontur (K) vorgesehenen Werkzeug (WZ) erzeugbar ist, überprüft und eine Prüfantwort erzeugt, und dass bei positiver Prüfantwort der Datensatz (D) in den Programmspeicher (12) übergeben wird.

## Claims

1. Programming system for compiling machining programmes (14) for machine tools (16) comprising sets of data (D), comprising a unit (20) for generating sets of data and a programme memory (12), **characterized in that** an intermediate memory (24) is associated with the unit (20) for generating sets of data, a set of data (D) generated by said unit being saved in said intermediate memory prior to being stored in the machining programme (14) in the programme memory (12), that a restriction checking unit (30) is provided for checking the set of data (D) held in the intermediate memory (24) with regard to compliance with at least one geometrical and/or mathematical restriction (34), comprising the assessment of whether the contour (K) of a workpiece (WS) predetermined by one or more sets of data (D) is able to be produced with the tool (WZ) provided for the manufacture of this contour (K), and for generating a check response and that with a positive check response the set of data (D) is transferred to the programme memory (12).

2. Programming system as defined in claim 1, **characterized in that** the unit (20) for generating sets of data is a unit for generating sets of data corresponding to manual actions.

3. Programming system as defined in claim 2, **characterized in that** the unit (20) for generating sets of data has an input panel (22) operable manually.

4. Programming system as defined in claim 2, **characterized in that** the unit (20') for generating sets of data generates the set of data (D) on the basis of a manual movement of machining units (18).

5. Programming system as defined in any one of the preceding claims, **characterized in that** the restriction checking unit (30) examines the set of data (D) with regard to at least one control-related, geometrical and/or mathematical restriction (34).

6. Programming system as defined in any one of the preceding claims, **characterized in that** the restriction checking unit (20) checks the set of data (D) with regard to at least one machine tool-related restriction (38).

7. Programming system as defined in any one of the preceding claims, **characterized in that** the restriction checking unit (30) checks the set of data (D) held in the intermediate memory (24) via calculation algorithms with regard to compliance with the at least one restriction (34, 38).

8. Programming system as defined in any one of the preceding claims, **characterized in that** a visualization unit (40) is associated with the programming system (10).

9. Programming system as defined in any one of the preceding claims, **characterized in that** with a negative check response of the restriction checking unit (30) the unit (20) for generating sets of data transfers into a correction mode.

10. Programming system as defined in any one of the preceding claims, **characterized in that** with a negative check response of the restriction checking unit (30) an assistance unit (42) is activatable.

11. Programming system as defined in claim 10, **characterized in that** the assistance unit (42) determines and displays user information.

12. Programming system as defined in any one of the preceding claims, **characterized in that** the restriction checking unit (30) is a unit separate from a machine control (70) of a machine tool (16).

13. Programming system as defined in any one of claims 1 to 11, **characterized in that** the restriction checking unit (30') is a restriction checking unit provided in a machine control (70).

14. Programming system as defined in claim 13, **characterized in that** the restriction checking unit (30') provided in the machine control (70) is associated with a core control programme (80) processing a machining programme (14).

15. Method of compiling machining programmes (14) for machine tools (16) comprising sets of data (D), using a unit (20) for generating sets of data and a programme memory (12), **characterized in that** a set of data (D) generated by the unit (20) for generating sets of data is saved prior to being stored in the machining programme (14), that a restriction check is carried out to check the set of data (D) with regard to compliance with at least one geometrical and/or mathematical restriction (34), comprising the assessment of whether the contour (K) of a workpiece (WS) predetermined by one or more sets of data (D) is able to be produced with the tool (WZ) provided for the manufacture of this contour (K), and to generate a check response and that with a positive check response the set of data (D) is transferred to the programme memory (12).

## Revendications

1. Système de programmation pour la création de programmes d'usinage (14) contenant des enregistrements (D) pour machines-outils (16), comprenant une unité de génération d'enregistrements (20) et une mémoire de programme (12),
**caractérisé en ce qu'**une mémoire tampon (24) est affectée à l'unité de génération d'enregistrements (20), où un enregistrement (D) généré par celle-ci est mémorisable dans la mémoire de programme (12) avant archivage dans le programme d'usinage (14), **en ce qu'**il est prévu une unité de contrôle de convention (30) qui contrôle le respect d'au moins une convention (34) géométrique et/ou mathématique par l'enregistrement (D) conservé en mémoire tampon (24), comprenant le constat que le contour (K) d'une pièce (WS) prescrit par un ou plusieurs enregistrements (D) peut être produit avec l'outil (WZ) prévu pour la production dudit contour (K), et génère une réponse de contrôle, et **en ce qu'**il est procédé à un transfert de l'enregistrement (D) vers la mémoire de programme (12) en cas de réponse de contrôle positive.

2. Système de programmation selon la revendication 1, **caractérisé en ce que** l'unité de génération d'enregistrements (20) est une unité de génération d'enregistrements réagissant à des actions manuelles.

3. Système de programmation selon la revendication 2, **caractérisé en ce que** l'unité de génération d'enregistrements (20) comporte un champ de saisie (22) à activation manuelle.

4. Système de programmation selon la revendication 2, **caractérisé en ce que** l'unité de génération d'enregistrements (20') génère l'enregistrement (D) sur la base d'un déplacement manuel d'unités d'usinage (18).

5. Système de programmation selon l'une des revendications précédentes, **caractérisé en ce que** l'unité de contrôle de convention (30) contrôle l'enregistrement (D) sous l'aspect d'au moins une convention (34) de commande géométrique et/ou mathématique.

6. Système de programmation selon l'une des revendications précédentes, **caractérisé en ce que** l'unité de contrôle de convention (20) contrôle l'enregistrement (D) sous l'aspect d'au moins une convention (38) de machine-outil.

7. Système de programmation selon l'une des revendications précédentes, **caractérisé en ce que** l'unité de contrôle de convention (30) contrôle au moyen d'algorithmes de calcul le respect de la ou des conventions (34, 38) par l'enregistrement (D) conservé en mémoire tampon (24).

8. Système de programmation selon l'une des revendications précédentes, **caractérisé en ce qu'**une unité de visualisation (40) est affectée au système de programmation (10).

9. Système de programmation selon l'une des revendications précédentes, **caractérisé en ce que** l'unité de génération d'enregistrements (20) passe en mode de correction en cas de réponse de contrôle négative de l'unité de contrôle de convention (30).

10. Système de programmation selon l'une des revendications précédentes, **caractérisé en ce qu'**une unité d'aide (42) est activable en cas de réponse de contrôle négative de l'unité de contrôle de convention (30).

11. Système de programmation selon la revendication 10, **caractérisé en ce que** l'unité d'aide (42) recherche et affiche des informations d'opérateur.

12. Système de programmation selon l'une des revendications précédentes, **caractérisé en ce que** l'unité de contrôle de convention (30) est une unité séparée d'une commande de machine (70) d'une machine-outil (16).

13. Système de programmation selon l'une des revendications 1 à 11, **caractérisé en ce que** l'unité de contrôle de convention (30') est une unité de contrôle de convention prévue dans une commande de machine (70).

14. Système de programmation selon la revendication 13, **caractérisé en ce que** l'unité de contrôle de convention (30') prévue dans la commande de machine (70) est associée à un programme de commande central (80) exécutant un programme d'usinage (14).

15. Procédé de création de programmes d'usinage (14) contenant des enregistrements (D) pour machines-outils (16), recourant à une unité de génération d'enregistrements (20) et à une mémoire de programme (12), **caractérisé en ce qu'**un enregistrement (D) généré par l'unité de génération d'enregistrements (20) est mémorisé avant archivage dans le programme d'usinage (14), **en ce qu'**un contrôle de convention est exécuté, lequel vérifie le respect d'au moins une convention (34) géométrique et/ou mathématique par l'enregistrement (D), comprenant le constat que le contour (K) d'une pièce (WS) prescrit par un ou plusieurs enregistrements (D) peut être produit avec l'outil (WZ) prévu pour la production dudit contour (K), et génère une réponse de contrôle, et **en ce que** l'enregistrement (D) est transféré vers la mémoire de programme (12) en cas de réponse de contrôle positive.
